(19) Europäisches Patentamt
European Patent Office
Office européen des brevets

(11) **EP 2 886 292 B1**

(12) **FASCICULE DE BREVET EUROPEEN**

(45) Date de publication et mention de la délivrance du brevet:
**15.03.2017 Bulletin 2017/11**

(21) Numéro de dépôt: **14199431.9**

(22) Date de dépôt: **19.12.2014**

(51) Int Cl.:
*B29C 47/00* *(2006.01)*     *B29C 47/08* *(2006.01)*
*B29C 47/16* *(2006.01)*     *B29K 105/00* *(2006.01)*
*B29C 47/02* *(2006.01)*     *B29K 75/00* *(2006.01)*

(54) **Procédé d'encollage en continu d'une composition adhésive avec une buse d'encollage ayant un bec d'extrusion avec un volume de relaxation**

Fortlaufendes Klebeverfahren für Klebeverbindung mit einer Klebedüse, die über eine Extrusionsspitze mit Entspannungsvolumen verfügt

Method for continuous sizing of an adhesive composition with a sizing nozzle having an extrusion tip with a relaxation volume

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363335**

(43) Date de publication de la demande:
**24.06.2015 Bulletin 2015/26**

(73) Titulaire: **BOSTIK SA**
**93210 La Plaine Saint Denis (FR)**

(72) Inventeurs:
• **Chartrel, Jean François**
**60400 Cuts (FR)**
• **Robert, Christophe**
**60150 Thourotte (FR)**
• **Grisot-Saule, Myriam**
**60200 Compiègne (FR)**

(74) Mandataire: **Bandpay & Greuter**
**30 rue Notre-Dame des Victoires**
**75002 Paris (FR)**

(56) Documents cités:
**US-A- 3 680 997    US-A1- 2004 241 327**

**Description**

L'invention concerne un procédé d'encollage en continu d'un film de substrat, le procédé d'encollage utilisant une buse d'encollage avec un bec d'extrusion en continu d'une composition adhésive en film.

Dans le domaine de l'extrusion de feuillets thermoplastiques, le document US 3 680 997 décrit une filière d'extrusion indiquant la possibilité de moduler l'épaisseur des feuillets à l'aide de différentes barres de striction tout au long de la filière. Dans le domaine de la production de film ayant plusieurs couches, le document JP S 55 28825 décrit l'utilisation d'éléments de résistance réduisant la section de passage de la filière.

Les emballages flexibles, notamment des emballages flexibles fabriqués par les industries agroalimentaire, cosmétique ou de la détergence, sont généralement constitués de plusieurs couches minces ou substrats (sous forme de feuilles ou de films). Ces couches de substrat peuvent être de différents matériaux comme le papier, l'aluminium ou les polymères thermoplastiques tels que le polyéthylène (ou PE), le polypropylène (ou PP), orienté ou non, les copolymères d'éthylène et d'acétate de vinyle (ou EVA). Ces différentes couches de substrat de l'emballage flexible sont liées entre elles par une couche d'une composition adhésive telle qu'une composition à base d'un copolymère bloc styrénique, pour une épaisseur totale comprise entre 5 et 150 $\mu$m. Les diverses couches de matériau qui composent le film multicouche sont ainsi combinées ou assemblées par contrecollage au cours d'une opération de fabrication dénommée complexage (également désignée en anglais par "lamination") qui met en oeuvre des colles et des dispositifs ou machines conçus à cet effet. Le film multicouche ainsi obtenu est souvent lui-même qualifié par les termes de complexe ou composite (ou encore par le terme "laminé").

Les colles de complexage peuvent parfois se présenter dans la pratique industrielle sous la forme de colles aqueuse (par exemple de type caséine ou acrylique) mais sont très généralement des compositions adhésives de type polyuréthanne. Ces dernières colles sont mises en oeuvre par les industriels spécialisés dans le complexage (souvent appelés complexeurs) dans des machines qui fonctionnent en continu avec des vitesses de ligne généralement élevées et dans lesquelles tant les films constituant les couches individuelles que le film complexe final sont, en raison de leurs très grandes dimensions, conditionnés par enroulement sous forme de larges bobines dont la largeur (ou laize) peut aller jusqu'à environ environ 2 m et le diamètre jusqu'à 1,80 m.

Les procédés de complexage généralement mis en oeuvre industriellement avec les colles de type polyuréthanne comprennent tout d'abord une étape d'enduction ou d'encollage de la colle sur un premier film de matériau, qui consiste en un dépôt sur la totalité de sa surface d'une couche de colle continue et d'épaisseur contrôlée, correspondant à une quantité de colle (ou grammage) également contrôlée. Cette étape d'enduction est suivie d'une étape de contrecollage, ou calandrage, d'un deuxième film de matériau, identique ou différent du premier, consistant en l'application sous pression de ce deuxième film sur le premier film recouvert de la couche de colle.

Lors de l'étape d'encollage du film de matériau, il est connu de recourir à l'extrusion d'une composition adhésive pour l'encollage sur le film défilant en continu.

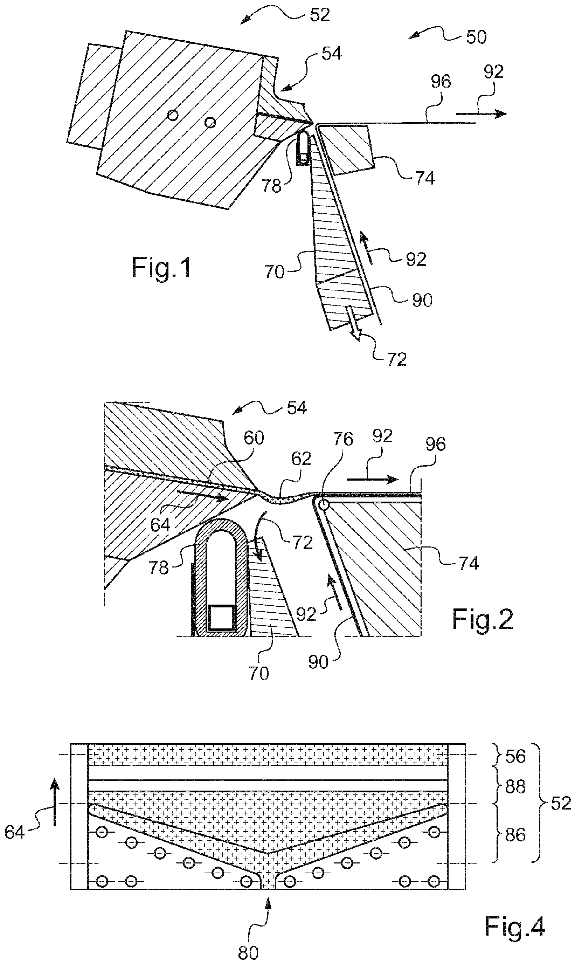

La figure 1 montre une vue de côté d'une installation connue 50 d'encollage en continu. La composition adhésive est extrudée par une buse d'encollage 52 avant d'être déposée sur le film de matériau 90 servant de substrat et défilant à proximité de la buse d'encollage 52, dans le sens des flèches 92. L'encollage est dit en continu car le film de substrat à encoller 90 est continument encollé à mesure que le film de substrat défile et sur l'ensemble de la largeur du film. Après l'encollage, le film de substrat encollé obtenu 96 est contrecollé avec le deuxième film de matériau (étape non illustrée).

Pour l'étape d'encollage, la composition adhésive sort d'un bec d'extrusion 54 de la buse 52. La figure 2 montre une vue agrandie de la figure 1 au niveau du bec d'extrusion 54, et de la zone d'encollage du film de substrat 90. Entre le bec d'extrusion 54 et le film de substrat 90, la composition adhésive extrudée 62 est soumise à un taux d'étirage. Le taux d'étirage est défini comme le rapport entre la vitesse de défilement du film de substrat 90, visualisée par les flèches 92, et la vitesse de la composition adhésive 60 à la sortie de la buse d'encollage, vitesse visualisée par la flèche 64. Ce taux d'étirage provoque un fort cisaillement de la composition adhésive à encoller 62.

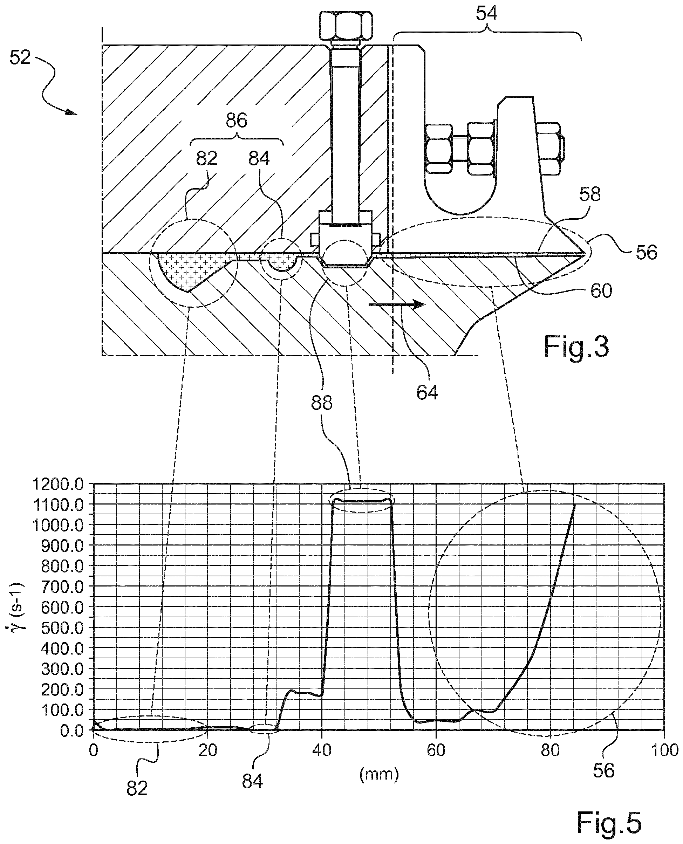

La composition adhésive peut aussi être soumise à un fort cisaillement lors de l'extrusion au sein de la buse d'encollage 52. La figure 3 montre une vue en coupe transversale de la buse d'encollage 52. Le plan représenté en figure 3 est ainsi un plan ayant pour normale la direction de la largeur de la buse d'encollage 52, c'est à dire la direction transversale. La figure 4 montre une vue en coupe de dessus de la buse d'encollage 52 au niveau du canal d'écoulement de la composition adhésive 60 dans la buse d'encollage 52. La composition adhésive 60 est prévue pour s'écouler selon le sens de la flèche 64. La composition adhésive 60 s'écoule depuis un orifice d'alimentation 80 de la buse d'encollage 52 vers une zone de distribution, ou de répartition 86, de l'écoulement de composition adhésive 60 sur la largeur de la buse d'encollage. La zone de répartition 86 se partage en une première partie 82 et une deuxième partie 84, visibles en figure 3. Une barre de striction 88 est disposée en aval de la zone de répartition 86 pour permettre un lissage du front de vitesses d'écoulement de la composition adhésive après la répartition. Cette barre de striction 88 induit un fort cisaillement dans la composition adhésive 60. La figure 5 montre un graphique représentant le taux de cisaillement lors de l'écoulement de la composition adhésive 60 dans la buse d'encollage 52. Les parties 82, 84, 88 et 56 correspondent aux parties de la buse d'encollage précédemment indiquées en figure 3. Notamment la partie 56 correspond à l'extrusion de la composition adhésive au niveau du bec 54. Ainsi en plus du cisaillement induit par la barre de striction 88, le bec d'extrusion 54 peut comprendre, formé entre les lèvres du bec, un canal 58 dont la section se réduit vers l'extrémité d'extrusion, induisant alors un cisaillement supplémentaire de la composition adhésive, tel qu'illustré en figure 5.

Ainsi la composition adhésive 60 avec laquelle le film de substrat est encollé peut être soumise à un fort cisaillement à la fois lors de l'extrusion dans la buse d'encollage 52 et à la sortie de la buse d'encollage 52. Or la composition adhésive 60 peut être sensible au cisaillement en présentant un caractère rhéofluidifiant. En d'autres termes, la cohésion de la composition adhésive peut décroître significativement avec le gradient de cisaillement. Ainsi pour les adhésifs thermofusibles sensibles à la pression (également désignés par l'expression anglaise hot-melt pressure sensitive adhesive, abrégée en HMPSA), le module de cohésion chute de une à plusieurs décades pour un taux de cisaillement au-delà de 400 à 800 s$^{-1}$. La cohésion de la composition adhésive chutant, cette cohésion peut ne pas suffire à maintenir l'homogénéité de l'écoulement de la composition adhésive extrudée 62 entre la buse d'encollage 52 et le film de substrat à encoller 90. L'écoulement de composition adhésive peut alors présenter des instabilités de nature à dégrader l'aspect de l'encollage voir des déchirements, qui se retrouvent alors sur le substrat encollé 96.

Ces instabilités et ces déchirements de l'enduit de composition adhésive sur le substrat encollé 96 augmentent avec la diminution de l'épaisseur de la couche de composition adhésive encollée, et avec l'accroissement de la vitesse du processus d'encollage. En d'autres termes, ces instabilités et ces déchirements limitent la vitesse du processus d'encollage et la finesse de l'encollage. En particulier la finesse de l'encollage peut être limitée à 5g/m$^2$, et la vitesse d'encollage limitée à 200m/min.

Il existe donc un besoin pour permettre l'amélioration de la vitesse d'encollage ou de la finesse de l'encollage.

Plus particulièrement, l'invention vise à augmenter la cohésion de la composition adhésive à encoller.

A cette fin, il est proposé un bec d'extrusion en continu d'une composition adhésive sur une largeur déterminée, le bec comprenant une lèvre inférieure et une lèvre supérieure, les lèvres supérieure et inférieure s'étendant parallèlement l'une à l'autre en formant un canal transversal d'écoulement longitudinal de la composition adhésive, le canal transversal s'étendant longitudinalement entre :

- une ouverture d'alimentation en composition adhésive ; et
- une sortie d'extrusion en composition adhésive ;

le canal comprenant un volume concave de relaxation de la composition adhésive entre l'ouverture d'alimentation et la sortie d'encollage.

Suivant des modes de réalisation préférés, le bec d'extrusion proposé comprend une ou plusieurs des caractéristiques suivantes :

- les lèvres supérieure et inférieure s'étendant parallèlement l'une à l'autre avec un écartement réglable ;
- à l'écartement minimal,

  - la sortie d'extrusion est close, et
  - l'épaisseur moyenne du volume de relaxation est supérieure à 0,75 mm, de préférence supérieure à 1,5 mm ;

- les surfaces internes au canal des lèvres inférieur et supérieur étant chromées ;
- la section transversale du volume concave de relaxation présente :

  - une épaisseur maximale ;
  - en amont de l'épaisseur maximale, une courbe de frontière avec la lèvre supérieure et une courbe de frontière avec la lèvre inférieure, toutes deux de rayon de courbure supérieure ou égal à 50mm ;
  - en aval de l'épaisseur maximale, une courbe de frontière avec la lèvre supérieure et une courbe de frontière avec la lèvre inférieure, toutes deux droites avec un rayon de raccordement à l'épaisseur maximale supérieure ou égal à 50mm.

- la section transversale du volume concave de relaxation présente une forme de goutte avec une partie demi-circulaire orientée vers l'ouverture d'alimentation et une partie triangulaire dont le sommet le plus aigu est orienté vers la sortie d'extrusion.

Il est en outre proposé une buse d'encollage en continu d'une composition adhésive en film d'une largeur déterminée, la buse d'enduction comprenant :

- un orifice d'alimentation en composition adhésive ;

- une zone de répartition de l'écoulement de composition adhésive de l'orifice d'alimentation sur la largeur de la buse d'encollage ;
- une barre de striction pour uniformiser le front de vitesse d'écoulement de la composition adhésive, sur la largeur de la buse d'encollage, après la zone de distribution ;
- le bec d'extrusion précédent, pour l'encollage en continu en film de la composition adhésive après la barre de striction.

Il est encore proposé une installation d'encollage d'une composition adhésive, comprenant :

- une alimentation en composition adhésive ;
- la buse d'encollage précédente et reliée à l'alimentation en composition adhésive ;
- un chemin de défilement d'un film de substrat à encoller avec la buse d'encollage sans contact.

Selon une variante l'installation comprend en outre une boîte à vide pour générer une dépression entre la buse d'encollage et le chemin de défilement du film de substrat.

Il est enfin proposé un procédé d'encollage en continu d'un film de substrat à l'aide de la buse d'encollage précédente ou de l'installation d'encollage prcédente, comprenant :

- la fourniture d'une composition adhésive à la buse ou l'installation d'encollage avec un débit, la composition adhésive présentant un comportement visqueux avec un temps de relaxation;
- l'extrusion de la composition adhésive à l'aide de la buse d'encollage, le volume de relaxation du bec de la buse d'encollage étant supérieur au produit du temps de relaxation et du débit de fourniture de la composition adhésive.

Plus particulièrement, le procédé d'encollage proposé est mis en oeuvre à l'aide d'une buse d'encollage comprenant un bec d'extrusion d'une composition adhésive sur une largeur déterminée, le bec comprenant une lèvre inférieure et une lèvre supérieure, les lèvres supérieure et inférieure s'étendant parallèlement l'une à l'autre en formant un canal transversal d'écoulement longitudinal de la composition adhésive, le canal transversal s'étendant longitudinalement entre :

- une ouverture d'alimentation en composition adhésive ; et
- une sortie d'extrusion en composition adhésive ;

le canal comprenant un volume concave de relaxation de la composition adhésive entre l'ouverture d'alimentation et la sortie d'encollage d'extrusion.

Suivant des modes de réalisation préférés, le procédé proposé comprend une ou plusieurs des caractéristiques suivantes :

- les lèvres supérieure et inférieure du bec s'étendent parallèlement l'une à l'autre avec un écartement réglable ;
- à l'écartement minimal du bec,

    - la sortie d'extrusion est close, et
    - l'épaisseur moyenne du volume de relaxation est supérieure à 0,75 mm, de préférence supérieure à 1,5 mm ;

- les surfaces internes au canal des lèvres inférieure et supérieure du bec étant chromées ;
- la section transversale du volume concave de relaxation présente :

    - une épaisseur maximale ;
    - en amont de l'épaisseur maximale, une courbe de frontière avec la lèvre supérieure et une courbe de frontière avec la lèvre inférieure, toutes deux de rayon de courbure supérieure ou égal à 50mm ;
    - en aval de l'épaisseur maximale, une courbe de frontière avec la lèvre supérieure et une courbe de frontière avec la lèvre inférieure, toutes deux droites avec un rayon de raccordement à l'épaisseur maximale supérieure ou égal à 50mm.

- lequel la section transversale du volume concave de relaxation du bec présente une forme de goutte avec une partie demi-circulaire orientée vers l'ouverture d'alimentation et une partie triangulaire dont le sommet le plus aigu est orienté vers la sortie d'extrusion ;
- la buse d'encollage comprend :

    - un orifice d'alimentation en composition adhésive ;

- une zone de répartition de l'écoulement de composition adhésive de l'orifice d'alimentation sur la largeur de la buse d'encollage ;
- une barre de striction pour uniformiser le front de vitesse d'écoulement de la composition adhésive, sur la largeur de la buse d'encollage, après la zone de distribution ;
- le bec d'extrusion étant disposé après la barre de striction ;

- la buse d'encollage, au sein d'une installation d'encollage d'une composition adhésive, est reliée à une alimentation en composition adhésive ; l'installation d'encollage comprenant en outre un chemin de défilement d'un film de substrat à encoller avec la buse d'encollage sans contact, l'installation d'encollage comprenant en outre, de préférence, une boîte à vide pour générer une dépression entre la buse d'encollage et le chemin de défilement du film de substrat.

D'autres caractéristiques et avantages de l'invention apparaîtront à la lecture de la description qui suit de modes de réalisation de l'invention, donnés à titre d'exemple et en référence aux dessins annexés.

La figure 1 montre une vue de côté d'une installation connue d'encollage en continu avec une buse d'encollage muni d'un bec d'extrusion.
La figure 2 montre une vue agrandie de la figure 1, au niveau du bec d'extrusion.
La figure 3 montre une vue en coupe transversale de la buse d'encollage de la figure 1.
La figure 4 montre une vue en coupe de dessus de la buse d'encollage de la figure 1.
La figure 5 montre un graphique représentant le taux de cisaillement lors de l'écoulement de la composition adhésive dans la buse d'encollage de la figure 1.
La figure 6 montre une vue, cotée en millimètre, en coupe transversale d'un mode de réalisation du bec proposé.
La figure 7 montre une buse d'encollage comprenant un mode de réalisation du bec d'extrusion proposé.
La figure 8 montre la buse de la figure 7 en position avec un réglage d'écartement au minimum.
La figure 9 montre une vue, cotée en millimètre, en coupe transversale du bec d'extrusion connu de l'installation de la figure 1.
La figure 10 montre un graphique représentant la viscosité d'une composition adhésive en fonction du taux de cisaillement sur une échelle logarithmique.
La figure 11 montre un graphique représentant le module visqueux et le module élastique d'une composition adhésive en fonction de la fréquence de cisaillement sur une échelle logarithmique.
La figure 12 montre un graphique représentant la qualité d'aspect de l'enduction en fonction de valeur d'écartement des becs d'extrusion des figures 6 et 9.

Il est proposé un bec d'extrusion d'une composition adhésive. Le bec proposé permet l'extrusion en continu et sur une largeur déterminée de la composition adhésive. La direction d'extrusion de la composition adhésive correspond à une direction dite longitudinale du bec d'extrusion et la largeur de la composition adhésive extrudée s'étend dans une direction dite transversale de la buse.

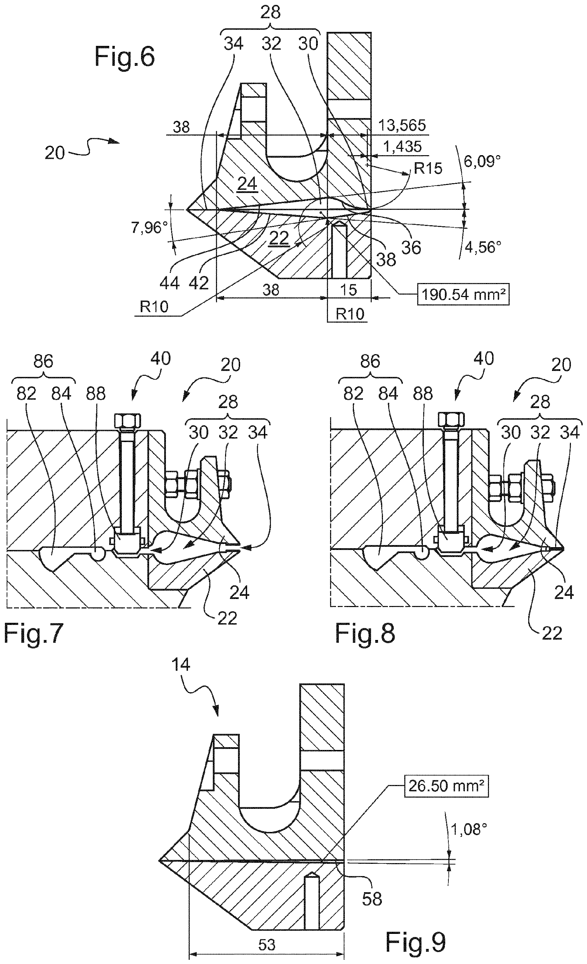

La figure 6 montre une vue, cotée en millimètre, en coupe transversale d'un mode de réalisation du bec proposé 20. Le plan représenté en figure 6 est ainsi un plan ayant pour normale la direction de la largeur du bec d'extrusion, c'est à dire la direction transversale. De manière analogue au bec d'extrusion connu 54 précédemment illustré avec la buse d'encollage 52 des figures 1 à 4, l'extrusion de la composition adhésive à la sortie du bec proposé 20 permet l'encollage en continu d'un film de substrat. En d'autres termes, le bec d'extrusion proposé est un bec de buse. Le bec d'extrusion proposé 20 peut ainsi être intégré dans la buse d'encollage 52 précédemment illustrée en figures 1 à 4, à la place du précédent bec d'extrusion 54 pour former une buse d'encollage proposée. La figure 7 montre une telle buse d'encollage proposée 40 comprenant le bec d'extrusion 20 proposé selon un mode de réalisation.

Le bec d'extrusion proposé comprend une lèvre inférieure 22 et une lèvre supérieure 24. Ces lèvres 22 et 24 s'étendent parallèlement l'une à l'autre dans la direction d'extrusion du bec, soit la direction longitudinale du bec. En s'étendant parallèlement l'une à l'autre, les lèvres 22 et 24 forment, entre elles, un canal 28 d'écoulement de la composition adhésive entre les lèvres 22 et 24. Le bec proposé 20 permettant l'extrusion sur toute la largeur du bec, le canal 28 d'écoulement s'étend principalement dans une direction transversal du bec.

Par ailleurs, ce canal transversal 28 s'étend aussi longitudinalement pour permettre l'écoulement de la composition adhésive dans la direction d'extrusion. Ainsi le canal transversal 28 s'étend longitudinalement entre une ouverture 30 d'alimentation en composition adhésive, situé sur le côté droit de la figure 6, et une sortie 34 d'extrusion de la composition adhésive. Selon les modes de réalisation illustrés en figures 6 et 7, les lèvres 22 et 24 s'étendent parallèlement l'une à l'autre avec un écartement réglable. Dans la position illustrée en figure 6, l'écartement entre les lèvres 22 et 24 étant réglé au minimum, la sortie d'extrusion 34 est close. En référence à la figure 7, le mode de réalisation de la buse proposée 20 est illustré avec les lèvres 22 et 24 en position écartée, la sortie d'extrusion 34 étant ouverte. La figure 8 montre la buse proposée 20 de la figure 7 en position avec un réglage d'écartement au minimum, c'est-à-dire que la sortie d'extrusion est close 34.

Le canal transversal 28 comprend, entre l'ouverture d'alimentation 30 et la sortie d'extrusion 34, un volume concave 32. Ce volume concave 32 est à comparer avec le volume du canal 58 formé entre les lèvres du bec d'extrusion connu 54 et illustré en figure 3. La figure 9 montre une vue, cotée en millimètre, en coupe transversale du bec d'extrusion connu 54. Selon cette figure 9, pour une longueur de 53mm et avec un angle de réduction du canal de 1,08°, la section transversale du canal 58 est égale à 26,50mm$^2$. Le volume concave 32 compris dans le bec d'extrusion proposé 20 présente une section, de 190.54mm$^2$, plus importante permettant la relaxation de la composition adhésive en aval du cisaillement élevé induit par la barre de striction 88 des buses d'encollage 40 et 52. Ce volume 32 de relaxation permet à la composition adhésive de regagner en cohésion avant l'extrusion à la sortie d'extrusion 34 et l'encollage sur le film de substrat 90 à encoller. Ce regain en cohésion permet à la composition adhésive de présenter en outre une cohésion plus importante après l'extrusion par le bec 20.

La cohésion plus importante autorise l'encollage d'un film de substrat sans instabilité ou déchirement de la composition adhésive enduite avec une vitesse d'encollage plus importante et une finesse améliorée de l'encollage. En effet, la buse proposée comprenant le bec proposé peut être intégrée à la place d'une buse d'encollage connu 52 dans une installation d'encollage similaire à l'installation 50 illustrée en figure 1. Une telle installation d'encollage améliorée par la buse d'encollage 40 est proposée et comprend de manière analogue à l'installation 50 de la figure 1, un chemin de défilement d'un film de substrat 90 à encoller. En référence à la figure 2, le chemin de défilement du film de substrat peut comprendre un coussin pneumatique 74 générant un volume d'air sous pression 76 pour limiter les frictions du film de substrat 90 lors du changement de direction de défilement au niveau de la buse d'encollage.

Cette installation proposée comprenant le bec 20 avec le volume de relaxation 32 permet des vitesses d'encollage supérieures ou égales à 300m/min, tel que 350m/min, 400m/ min ou encore 600m/min, et pour des grammages d'encollage, inférieurs ou égaux à 5g/m$^2$, tel que 2g/m$^2$. A la suite de l'encollage du substrat, le substrat encollé 96 peut être contrecollé avec un deuxième film de matériau (étape non illustrée) pour former un emballage flexible, tel que précédemment décrit.

En définitive, le bec proposé, la buse proposée et l'installation d'encollage proposée assurent une amélioration de la vitesse d'encollage ainsi que de la finesse de l'encollage, en permettant l'augmentation de la cohésion de la composition adhésive extrudée.

L'augmentation de la cohésion de la composition adhésive extrudée est particulièrement avantageuse pour l'installation d'encollage de substrat proposée lorsque l'enduction du film de substrat est réalisée sans contact telle que pour l'installation 50 illustrée en figure 1.

D'une part, en référence aux figures 1 et 2, l'installation 50 d'encollage sans contact peut comprendre une boîte à vide 70 permettant l'extraction d'air 72 au niveau de la composition adhésive extrudée. Cette extraction d'air 72 permet de générer une dépression contrebalançant l'effet venturi, c'est-à-dire la dépression, induit par la vitesse de la composition adhésive ce qui limite l'incorporation d'air dans la composition adhésive à encoller sur le substrat de film. L'augmentation de la cohésion de la composition adhésive permet alors à la composition adhésive extrudée de supporter cette dépression supplémentaire de la boîte à vide sans instabilité ou déchirement.

D'autre part, l'encollage sans contact suppose une distance entre la buse d'encollage 40 et le substrat 90, de l'ordre de 1mm. Cette distance relativement élevée par rapport à l'épaisseur de l'encollage induit un risque accru de déchirement de la composition adhésive entre la buse d'encollage 40 et le substrat 90. La plus grande cohésion de la composition adhésive extrudée permet alors de limiter un tel risque.

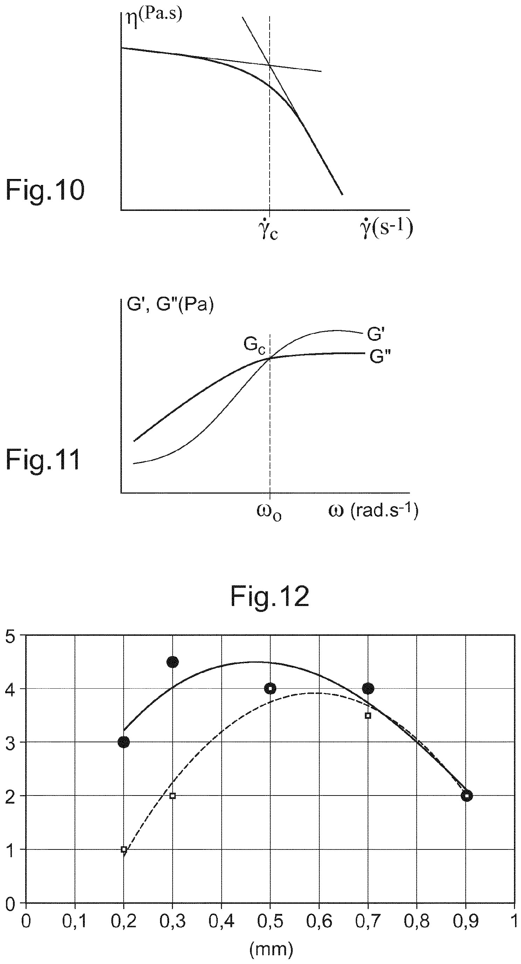

Le regain en cohésion permis par le volume de relaxation du bec proposé est lié au temps de séjour de la composition adhésive à des cisaillements peu élevés. La figure 10 montre un graphique représentant la viscosité $\eta$ de la composition adhésive à extruder en fonction du taux de cisaillement $\dot{\gamma}$ en échelle logarithmique. Ce graphique montre la chute de cohésion de composition adhésive avec l'augmentation du cisaillement. La courbe de viscosité présente deux asymptotes, une à gauche, une à droite du graphique, se croisant en un point d'abscisse $\dot{\gamma}_C$. Le comportement visqueux de la composition adhésive peut alors être modélisé de façon simplifié comme présentant en deçà de $\dot{\gamma}_C$ une cohésion forte et au-delà de $\dot{\gamma}_C$ une cohésion faible. $\dot{\gamma}_C$ correspond ainsi à l'inverse d'un temps de relaxation $\lambda_C$ caractéristique du temps de séjour nécessaire à la composition adhésive pour retrouver une cohésion forte. Le volume de relaxation 32 dans le bec d'extrusion proposé permet d'augmenter le temps de séjour de la composition adhésive entre le passage par la barre de striction 88 et l'extrusion à la sortie du bec. Ce temps de séjour de la composition adhésive peut ainsi dépasser le temps de relaxation $\lambda_C$ de sorte que la composition adhésive retrouve une cohésion forte avant l'extrusion.

Selon une alternative à la détermination du temps de relaxation à l'aide de la figure 10, le temps de relaxation peut être déterminé à l'aide du module de cisaillement complexe $G^*$ de la composition adhésive. La figure 11 montre un graphique représentant le module visqueux $G'$ (également appelé module de conservation) et le module élastique $G''$ (également appelé module de perte) de la composition adhésive en fonction de la fréquence $\omega$ de cisaillement sur une échelle logarithmique. Le module visqueux $G'$ et le module élastique $G''$ correspondent respectivement à la partie réelle et à la partie imaginaire du module de cisaillement complexe *G\** de la composition adhésive selon l'équation suivante :

$$G^*(\omega) = G'(\omega) + iG''(\omega)$$

Selon la figure 11, l'abscisse du point d'intersection du module de conservation *G'* et du module de perte *G''* correspond alors à une fréquence $\omega 0$ caractéristique du comportement visqueux de la composition adhésive. Le temps de relaxation $\lambda_C$ de la composition adhésive est alors égal à l'inverse de cette fréquence caractéristique $\omega 0$.

L'amélioration de la cohésion de la composition adhésive à encoller peut être obtenue à l'aide d'un procédé proposé d'encollage. Selon ce procédé proposé, la composition adhésive est fournie puis extrudée à l'aide de la buse proposée. Cette fourniture et l'extrusion présente un certain débit de composition adhésive. La composition adhésive présente un temps de relaxation caractéristique. Le volume de relaxation du bec d'extrusion compris dans la buse proposée est alors adapté au temps de relaxation et au débit de la composition adhésive. En effet le temps de séjour de la composition adhésive dans le bec d'extrusion, à la suite de la barre de striction est égal au rapport entre le volume du canal transversal 28 et le débit de la composition adhésive. Le temps de séjour est alors supérieur au temps de relaxation de la composition adhésive lorsque le volume de relaxation 28 est supérieur au produit du temps de relaxation et du débit de la composition adhésive.

Le volume de relaxation 28 du canal transversal 32 peut être caractérisé par son épaisseur moyenne dans la position d'écartement minimal, c'est-à-dire pour laquelle la sortie d'extrusion est close 34. L'épaisseur moyenne du volume de relaxation peut être supérieure à 0,75 mm, de préférence supérieure à 1,5 mm, tel qu'en figure 6 où l'épaisseur moyenne est égale à 3,6 mm. En comparaison, pour le bec d'extrusion connu illustrée en figure 9, l'épaisseur moyenne est égale à 0,5 mm.

Alternativement, le volume de relaxation peut être caractérisé par son épaisseur maximale dans la position d'écartement minimale des lèvres 22 et 24. L'épaisseur maximale du volume de relaxation peut ainsi être supérieure à 1,5 mm, de préférence supérieure à 3mm, tel qu'en figure 6 où l'épaisseur maximale est égale à 7,5 mm.

La forme concave du volume de relaxation du canal transversal 32 peut être caractérisée par la section transversale de ce volume. Cette section transversale correspond à la surface visible en figures 6 et 8 entre les lèvres 22 et 24 dans leur position d'écartement minimale. En conformité avec le mode de réalisation illustrée en figure 8, cette section transversale peut être en forme de goutte. Cette forme de goutte correspond à l'assemblage d'une partie demi-circulaire orientée vers l'ouverture d'alimentation 30 et d'une partie triangulaire 34 dont le sommet le plus aigu est orienté vers la sortie. En conformité avec les modes de réalisation illustrés en figures 6 et 8, la section peut présenter une épaisseur maximale, en amont de cette épaisseur maximale une périphérie avec un rayon de courbure supérieure ou égale à 50mm et en aval de cette épaisseur maximale une périphérie en portions de droite avec un rayon de raccordement à l'épaisseur maximale supérieure ou égal à 50mm. Ainsi en amont, les courbes de frontière de la section transversale avec la lèvre supérieure et la lèvre inférieure, respectivement 36 et 38, peuvent présenter toutes deux des rayons de courbure supérieurs ou égaux à 50mm. De même en aval, les courbes de frontière de la section transversale avec la lèvre supérieure et la lèvre inférieure, respectivement 44 et 42, peuvent être toutes deux droites avec un rayon de raccordement à l'épaisseur maximale supérieur ou égal à 50mm.

Le volume de relaxation 32 permis par le bec d'extrusion peut être adapté avec l'écartement réglable des lèvres supérieure et inférieure tel que dans les modes de réalisation illustrés en figures 6 à 8. Le volume de relaxation 32 est en effet égal au volume du canal transversal 28 dans la position d'écartement minimal ajouté au volume d'écartement des lèvres 22 et 24 du bec, soit le produit entre l'écartement, la largeur du bec et la longueur du bec.

Toutefois, l'augmentation de l'écartement des lèvres du bec entraîne aussi une augmentation du taux d'étirage, précédemment mentionné comme le rapport entre la vitesse de défilement du film de substrat à encoller 90 et la vitesse de la composition adhésive à la sortie de la buse d'encollage 40. En effet, par la conservation du débit lors du procédé d'encollage, ce taux d'étirage est aussi égal au rapport entre la section de la sortie d'extrusion du bec 20 et la section de la composition adhésive déposée sur le film de substrat 90. Or la réduction de la largeur de la composition adhésive entre le bec d'extrusion 20 et le film de substrat 90 (réduction également désignée par l'expression anglaise "Neck-in") étant faible, le taux d'étirage dépend fortement du rapport entre l'écartement de la sortie d'extrusion du bec et l'épaisseur de la composition adhésive encollée. L'épaisseur de la composition adhésive encollée étant imposée par le débit du procédé d'encollage, la variation de l'écartement de la sortie d'extrusion du bec 20 (grandeur également désignée par le terme anglais "Shim", abrégé en S) influe directement et de façon croissante sur le taux d'étirage.

L'augmentation du taux d'étirage entraîne une augmentation du cisaillement de la composition adhésive extrudée avant son encollage. Une augmentation trop forte du cisaillement entraîne alors une baisse importante de cohésion de la composition adhésive extrudée. Une baisse trop importante de la cohésion après l'extrusion de la composition adhésive présente le risque d'apparition d'instabilités ou de déchirements. Il existe donc un optimum d'écartement des

7

lèvres du bec entre les effets positifs pour la cohésion de l'augmentation du temps de séjour de la composition adhésive par rapport à son temps de relaxation et les effets négatifs pour la cohésion de l'augmentation du taux d'étirage.

La figure 12 montre un graphique représentant la qualité d'aspect de l'enduction en fonction de valeur d'écartement, S, des becs d'extrusion des figures 6 et 9. La qualité d'aspect est graduée de 1 à 5, correspondant respectivement à un aspect mauvais et inhomogène, à un aspect mauvais et homogène, à un aspect acceptable, à un aspect bon et à un aspect très bon. Les points pleins et la courbe pleine correspondent à la qualité d'aspect de l'enduction à l'aide du bec proposée 20 de la figure 6. Les carrés vides et la courbe en pointillés correspondent à la qualité d'aspect de l'enduction à l'aide du bec connu 14 de la figure 9. Ces valeurs ont été obtenues pour une même composition adhésive ci-après exemple 1 avec une vitesse de production de 300m/min et un grammage de 3g/m$^2$. La composition adhésive exemple 1 est constituée de 40% de Kraton® D1113 et de 60% d'Escorez® 5400. Le Kraton® correspond à un mélange disponible auprès de la société Kraton de polymères linéaires comprenant 56% de dibloc styrène isoprène, 44 % de tribloc styrène isoprène styrène avec une teneur globale en motifs styréniques de 16%. L'Escorez® 5400 est une résine de la société Exxon Chemicals, obtenue par polymérisation, puis hydrogénation d'un mélange d'hydrocarbures aliphatiques insaturés ayant environ 9 ou 10 atomes de carbones.

Les deux courbes montrent un optimum pour l'ouverture S du bec. L'influence positive du volume de relaxation sur la qualité d'aspect peut être relevée de deux manières. D'une part la qualité d'aspect de l'enduction est globalement meilleure pour le bec proposé 20 par rapport au bec connu 14, notamment l'optimum de qualité d'aspect est supérieur pour le bec proposé 20. D'autre part, la valeur d'écartement pour atteindre l'optimum de qualité d'aspect est inférieure pour le bec proposé 20 par rapport au bec connu 14. Le bec proposé 20 permet donc d'obtenir une meilleure qualité d'aspect et ce à un écartement moindre des lèvres du bec. L'obtention de cette meilleure qualité à un écartement moindre permet notamment l'augmentation de la vitesse d'enduction tout en maintenant une qualité d'aspect supérieure ou égale à la qualité d'aspect obtenu avec le bec connu 14.

Les améliorations de la qualité d'aspect de l'encollage peuvent être obtenues avec une grande variété de compositions adhésives présentant des temps de relaxation adaptés au volume du canal de relaxation. Le procédé proposé d'encollage peut notamment être mis en oeuvre avec des compositions adhésives présentant des temps de relaxation de l'ordre de la milliseconde à la température d'encollage, tel que les compositions adhésives à base de styrène isoprène styrène. Les températures d'encollage sont par exemple comprises entre 160°C et 120°C. Le tableau suivant montre les différents temps de relaxation pour différentes compositions adhésives dont la composition adhésive exemple 1 et deux autres compositions adhésives, respectivement dite exemple 2 et dite exemple 3.

La composition adhésive dite exemple 2 est constituée de 40% de Kraton® D1113, de 20% d'Escorez® 5400, de 30% de Dertopoline® P125 et de 10% de Nyflex 222B. Le Dertopoline® P125 est un ester de colophane polymérisé avec du pentaerythritol et disponible auprès de la société DRT. Le Nyflex 222B correspond à un plastifiant sous forme d'huile paraffinique et naphténique contenant des composés aromatiques.

La composition adhésive dite exemple 3 est constituée de 40% de Kraton® D1113, de 10% de Sylvatact® RE12, de 30% d'Escorez® 2203 LC et de 20% de Dertopoline® P125. Le Sylvatact® RE12 est une résine sous forme d'ester de colophane disponible auprès de la société Arizona Chemicals. L'Escorez® 2203 LC est une résine hydrocarbonée aliphatique modifiée ayant environ 9 ou 10 atomes de carbone et disponible auprès de la société Exxon Chemicals.

Tableau : temps de relaxation des compositions adhésives en fonction de la température d'encollage

| Références / Température | 160°C | 140°C | 120°C | 100°C |
|---|---|---|---|---|
| Exemple 1 | 0,102 ms | 0,410 ms | 5,600 ms | 270,000 ms |
| Exemple 2 | 0,198 ms | 0,150 ms | 0,730 ms | 15,000 ms |
| Exemple 3 | 0, 816 ms | 0,490 ms | 3 ,000 ms | 47,000 ms |

Les températures d'encollage 160°C, 140°C et 120°C permettent d'obtenir des temps de relaxation pour les compositions adhésives exemples 1 à 3 qui soient inférieurs au temps de séjour permis par le volume de relaxation du bec proposé. Ces compositions adhésives peuvent ainsi être encollées au film de substrat 90 selon le procédé proposé à des températures de 160°C à 120°C. De manière générale, le procédé proposé permet l'encollage de composition adhésive présentant à la température d'encollage des temps de relaxation de 0,1 à 2,0 ms.

Bien entendu, la présente invention n'est pas limitée aux exemples et aux modes de réalisation décrits et représentés, mais elle est susceptible de nombreuses variantes. En particulier, les exemples de compositions adhésives précédentes sont à base de styrène isoprène styrène, mais le bec d'extrusion, la buse et l'installation d'enduction et le procédé d'enduction peuvent être prévus pour toute autre composition adhésive sensible au cisaillement, en d'autres termes pour d'autres compositions adhésives à caractère rhéofluidifiant. Les lèvres supérieures et inférieures 24 et 22 peuvent notamment présenter des surfaces internes au canal 32 qui soient polies, ou chromées ou encore polies et chromées. Le chromage, de même que le polissage, permettent, ensemble et séparément, par la réduction de la rugosité de surface de limiter le frottement et de réduire le cisaillement de la composition adhésive lors de l'extrusion par le bec et donc de limiter la diminution de la cohésion de la composition adhésive.

**Revendications**

1. Procédé d'encollage en continu d'un film de substrat à l'aide d'une buse d'encollage (40) comprenant un bec d'extrusion (20) d'une composition adhésive sur une largeur déterminée, le bec (20) comprenant une lèvre inférieure (22) et une lèvre supérieure (24), les lèvres supérieure et inférieure (24, 22) s'étendant parallèlement l'une à l'autre en formant un canal transversal (28) d'écoulement longitudinal de la composition adhésive, le canal transversal s'étendant longitudinalement entre :

   - une ouverture (30) d'alimentation en composition adhésive ; et
   - une sortie (34) d'extrusion en composition adhésive ;

   le canal (28) comprenant un volume concave (32) de relaxation de la composition adhésive entre l'ouverture d'alimentation (30) et la sortie d'extrusion (34),
   le procédé comprenant :

   - la fourniture d'une composition adhésive (60) à la buse (40) d'encollage avec un débit, la composition adhésive (60) présentant un comportement visqueux avec un temps de relaxation défini selon la description ($\lambda_C$);
   - l'extrusion de la composition adhésive (60) à l'aide de la buse d'encollage (40), le procédé étant **caractérise en ce que**

   le volume de relaxation (32) du bec (20) de la buse d'encollage (40) est supérieur au produit du temps de relaxation ($\lambda_C$) et du débit de fourniture de la composition adhésive.

2. Procédé d'encollage selon la revendication 1, dans lequel les lèvres supérieure et inférieure (24, 22) du bec s'étendent parallèlement l'une à l'autre avec un écartement réglable.

3. Procédé d'encollage selon la revendication 2, dans lequel, à l'écartement minimal du bec,

   - la sortie d'extrusion (34) est close, et
   - l'épaisseur moyenne du volume de relaxation (32) est supérieure à 0,75 mm, de préférence supérieure à 1,5 mm.

4. Procédé d'encollage selon l'une des revendications 1 à 3, les surfaces internes au canal des lèvres inférieure et supérieure (22, 24) du bec étant chromées.

5. Procédé d'encollage selon l'une des revendications 1 à 4, dans lequel la section transversale du volume concave de relaxation (32) du bec présente :

   - une épaisseur maximale ;
   - en amont de l'épaisseur maximale, une courbe de frontière (36) avec la lèvre supérieure et une courbe de frontière (38) avec la lèvre inférieure, toutes deux de rayon de courbure supérieur ou égal à 50mm ;
   - en aval de l'épaisseur maximale, une courbe de frontière (44) avec la lèvre supérieure et une courbe de frontière (42) avec la lèvre inférieure, toutes deux (42, 44) droites avec un rayon de raccordement à l'épaisseur maximale supérieure ou égal à 50mm.

6. Procédé d'encollage selon l'une des revendications 1 à 5, dans lequel la section transversale du volume concave de relaxation (32) du bec présente une forme de goutte avec une partie demi-circulaire orientée vers l'ouverture d'alimentation (30) et une partie triangulaire dont le sommet le plus aigu est orienté vers la sortie d'extrusion (34).

7. Procédé d'encollage selon l'une des revendications 1 à 6, la buse d'encollage (40) en continu d'une composition adhésive en film d'une largeur déterminée, comprenant :

   - un orifice (80) d'alimentation en composition adhésive ;

- une zone de répartition (86) de l'écoulement de composition adhésive de l'orifice d'alimentation (80) sur la largeur de la buse d'encollage (40) ;
- une barre de striction (88) pour uniformiser le front de vitesse d'écroulement de la composition adhésive, sur la largeur de la buse d'encollage (40), après la zone de distribution (86) ;
- le bec d'extrusion (20) étant disposé après la barre de striction (88).

8. Procédé d'encollage selon l'une des revendications 1 à 7, dans lequel la buse d'encollage (40), au sein d'une installation d'encollage d'une composition adhésive, est reliée à une alimentation en composition adhésive ; l'installation d'encollage comprenant en outre un chemin de défilement d'un film de substrat (90) à encoller avec la buse d'encollage (40) sans contact.

9. Procédé d'encollage selon la revendication 8, l'installation d'encollage comprenant en outre :

- une boîte à vide (70) pour générer une dépression entre la buse d'encollage (40) et le chemin de défilement du film de substrat (90).

**Patentansprüche**

1. Fortlaufendes Klebeverfahren einer Substratfolie mit Hilfe einer Klebedüse (40), umfassend eine Extrusionsspitze (20) einer Haftzusammensetzung auf einer bestimmten Breite, wobei die Spitze (20) eine untere Lippe (22) und eine obere Lippe (24) umfasst, wobei sich die obere und untere Lippe (24, 22) parallel zueinander erstrecken, wobei sie einen Querkanal (28) für den Längsabfluss der Haftzusammensetzung bilden, wobei sich der Querkanal längs erstreckt zwischen:

- einer Öffnung (30) zur Versorgung mit einer Haftzusammensetzung; und
- einem Extrusionsausgang (34) von Haftzusammensetzung;

wobei der Kanal (28) ein konkaves Entspannungsvolumen (32) der Haftzusammensetzung zwischen der Versorgungsöffnung (30) und dem Extrusionsausgang (34) umfasst,
wobei das Verfahren umfasst:

- die Bereitstellung einer Haftzusammensetzung (60) an der Klebedüse (40) mit einer Menge, wobei die Haftzusammensetzung (60) ein viskoses Verhalten mit einer Entspannungszeit ($\lambda$C), wie in der Beschreibung definiert, aufweist,
- die Extrusion der Haftzusammensetzung (60) mit Hilfe der Klebedüse (40),

wobei das Verfahren **dadurch gekennzeichnet ist, dass** das Entspannungsvolumen (32) der Spitze (20) der Klebedüse (40) größer als das Produkt der Entspannungszeit ($\lambda$C) und der bereitgestellten Menge der Haftzusammensetzung ist.

2. Klebeverfahren nach Anspruch 1, bei dem sich die obere und untere Lippe (24, 22) der Spitze parallel zueinander mit regulierbarem Abstand erstrecken.

3. Klebeverfahren nach Anspruch 2, bei dem beim Mindestabstand der Spitze

- der Extrusionsausgang (34) geschlossen ist, und
- die durchschnittliche Dicke des Entspannungsvolumens (32) größer als 0,75 mm, vorzugsweise größer als 1,5 mm ist.

4. Klebeverfahren nach einem der Ansprüche 1 bis 3, wobei die Innenflächen des Kanals der unteren und oberen Lippen (22, 24) der Spitze verchromt sind.

5. Klebeverfahren nach einem der Ansprüche 1 bis 4, bei dem der Querschnitt des konkaven Entspannungsvolumens (32) der Spitze aufweist:

- eine maximale Dicke,
- stromaufwärts zu der maximalen Dicke eine Grenzkurve (36) mit der oberen Lippe und eine Grenzkurve (38) mit der unteren Lippe, wobei beide einen Krümmungsradius größer oder gleich 50 mm aufweisen;
- stromabwärts zu der maximalen Dicke eine Grenzkurve (44) mit der oberen Lippe und eine Grenzkurve (42) mit der unteren Lippe, wobei beide (42, 44) gerade sind, mit einem Anschlussradius an die maximale Dicke größer oder gleich 50 mm.

6. Klebeverfahren nach einem der Ansprüche 1 bis 5, bei dem der Querschnitt des konkaven Entspannungsvolumens (32) der Spitze eine Tropfenform mit einem halbkreisförmigen Abschnitt, der zur Versorgungsöffnung (30) gerichtet ist, und einem dreieckigen Abschnitt, dessen spitzeste Spitze zum Extrusionsausgang (34) gerichtet ist, aufweist.

7. Klebeverfahren nach einem der Ansprüche 1 bis 6, wobei die Düse (40) zum kontinuierlichen Kleben einer Haftzusammensetzung als Folie von bestimmter Breite umfasst:

   - eine Versorgungsöffnung (80) mit einer Haftzusammensetzung;
   - eine Verteilungszone (86) des Abflusses von Haftzusammensetzung von der Versorgungsöffnung (80) auf der Breite der Klebedüse (40);
   - einen Verengungsstab (88), um die Abflussgeschwindigkeitsfront der Haftzusammensetzung auf der Breite der Klebedüse (40) nach der Verteilungszone (86) zu vereinheitlichen;
   - wobei die Extrusionsspitze (20) nach dem Verengungsstab (88) angeordnet ist.

8. Klebeverfahren nach einem der Ansprüche 1 bis 7, bei dem die Klebedüse (40) in einer Anlage zum Kleben einer Haftzusammensetzung mit einer Versorgung mit Haftzusammensetzung verbunden ist; wobei die Klebevorrichtung ferner eine Ablaufstrecke einer mit der Klebedüse (40) ohne Kontakt zu klebenden Substratfolie (90) umfasst.

9. Klebeverfahren nach Anspruch 8, wobei die Klebevorrichtung ferner umfasst:

   - ein Vakuumgehäuse (70), um einen Unterdruck zwischen der Klebedüse (40) und der Ablaufstrecke der Substratfolie (90) zu erzeugen.

## Claims

1. Method for the continuous application of adhesive to a film of substrate using an adhesive application nozzle (40) comprising an extrusion tip (20) for extruding an adhesive composition over a determined width, the tip (20) comprising a lower lip (22) and an upper lip (24), the upper and lower lips (24, 22) running parallel to one another and forming a transverse canal (28) for the longitudinal flow of the adhesive composition, the transverse canal extending longitudinally between:

   - an adhesive composition supply opening (30); and
   - an adhesive composition extrusion outlet (34); the canal (28) comprising a concave volume (32) for relaxation of the adhesive composition between the supply opening (30) and the extrusion outlet (34),

   the method comprising:

   - supplying an adhesive composition (60) to the adhesive application nozzle (40) at a flow rate, the adhesive composition (60) having a viscous behaviour with a relaxation time defined according to the description ($\lambda_C$);
   - extruding the adhesive composition (60) using the adhesive application nozzle (40), the method being **characterized in that** the relaxation volume (32) of the tip (20) of the adhesive application nozzle (40) is greater than the product of the relaxation time ($\lambda_C$) and the flow rate at which the adhesive composition is supplied.

2. Adhesive application method according to Claim 1, in which the upper and lower lips (24, 22) of the tip run parallel to one another with an adjustable spacing.

3. Adhesive application method according to Claim 2, in which, at the minimum spacing of the tip,

   - the extrusion outlet (34) is closed, and
   - the mean thickness of the relaxation volume (32) is greater than 0.75 mm, preferably greater than 1.5 mm.

4. Adhesive application method according to one of Claims 1 to 3, the surfaces internal to the canal of the lower and upper lips (22, 24) of the tip being chromium plated.

5. Adhesive application method according to one of Claims 1 to 4, in which the cross section of the concave relaxation volume (32) of the tip exhibits:

- a maximum thickness;
- upstream of the maximum thickness, a boundary curve (36) for the boundary with the upper lip, and a boundary curve (38) for the boundary with the lower lip, both having a radius of curvature greater than or equal to 50 mm;
- downstream of the maximum thickness, a boundary curve (44) for the boundary with the upper lip and a boundary curve (42) for the boundary with the lower lip both of which (42, 44) are straight lines with a blend radius where they meet the maximum thickness greater than or equal to 50 mm.

6. Adhesive application method according to one of Claims 1 to 5, in which the cross section of the concave relaxation volume (32) of the tip is teardrop shaped with a semicircular part facing towards the supply opening (30) and a triangular part the most pointed vertex of which faces towards the extrusion outlet (34).

7. Adhesive application method according to one of Claims 1 to 6, the adhesive application nozzle (40) for continuous application of an adhesive composition in a film of a determined width comprising:

- an adhesive composition supply orifice (80);
- a distribution zone (86) for spreading the flow of adhesive composition of the supply orifice (80) across the width of the adhesive application nozzle (40);
- a striction bar (88) to even out the front representing the speed of flow of the adhesive composition across the width of the adhesive application nozzle (40), after the distribution zone (86);
- the extrusion tip (20) being positioned after the striction bar (88).

8. Adhesive application method according to one of Claims 1 to 7, in which the adhesive application nozzle (40), within an installation for applying an adhesive composition, is connected to an adhesive composition supply; the adhesive application installation further comprising a path along which a film of substrate (90) that is to be coated contactlessly by the adhesive application nozzle (40) progresses.

9. Adhesive application method according to Claim 8, the adhesive application installation further comprising:

- a vacuum box (70) for generating a depression between the adhesive application nozzle (40) and the path along which the film of substrate (90) progresses.

Fig.1

Fig.2

Fig.4

Fig.3

Fig.5

Fig.6

Fig.7

Fig.8

Fig.9

Fig.10

Fig.11

Fig.12

(mm)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3680997 A

- JP S5528825 A